# EUROPEAN PATENT SPECIFICATION

(11) **EP 4 219 569 B1**
(45) Date of publication and mention of the grant of the patent: **18.12.2024**
(21) Application number: 21872487.0
(22) Date of filing: 22.09.2021
(51) Int. Cl.: C08F 8/14, C08F 216/06

(54) **ACETOACETYL GROUP-CONTAINING POLY(VINYL ALCOHOL)-BASED RESIN AND METHOD FOR PRODUCING ACETOACETYL GROUP-CONTAINING POLY(VINYL ALCOHOL)-BASED RESIN**
HARZ AUF BASIS VON ACETOACETYLGRUPPEHALTIGEM POLYVINYLALKOHOL UND VERFAHREN ZUR HERSTELLUNG VON HARZ AUF BASIS VON ACETOACETYLGRUPPEHALTIGEM POLYVINYLALKOHOL
RÉSINE À BASE DE POLY(ALCOOL VINYLIQUE) CONTENANT UN GROUPE ACÉTOACÉTYLE ET PROCÉDÉ DE PRODUCTION DE RÉSINE À BASE DE POLY(ALCOOL VINYLIQUE) CONTENANT UN GROUPE ACÉTOACÉTYLE

(30) Priority: 24.09.2020 JP 2020159249
(43) Date of publication of application: 02.08.2023
(73) Proprietor: Mitsubishi Chemical Corporation, Chiyoda-ku Tokyo 100-8251 (JP)
(72) Inventor: YANO, Tomotake, Tokyo 100-8251 (JP); TSUJIMOTO, Takayuki, Tokyo 100-8251 (JP)
(74) Representative: Vossius & Partner Patentanwälte Rechtsanwälte mbB
(86) International application number: PCT/JP2021/034784
(87) International publication number: WO 2022/065358

(56) References cited:
- CN-A- 103 059 203
- JP-A- 2010 168 500
- JP-A- 2016 113 374
- JP-A- H09 110 925
- JP-A- H09 110 925
- JP-A- H09 265 149
- US-A- 5 719 231
- US-A1- 2004 186 217
- US-A1- 2016 237 183
- US-A1- 2016 289 362

## Description

### TECHNICAL FIELD

The present disclosure relates to an acetoacetyl group-containing polyvinyl alcohol resin having little variation in acetoacetyl group-containing structural unit content depending on particle size range, and a method for producing the same.

### BACKGROUND ART

It is known that an acetoacetyl group-containing polyvinyl alcohol resin obtained by acetoacetylation of a polyvinyl alcohol resin can be imparted with excellent water resistance due to higher reactivity with various crosslinking agents. The polyvinyl alcohol resin is hereinafter sometimes referred to as PVA. The acetoacetylation is hereinafter sometimes referred to as AA. The acetoacetyl group-containing polyvinyl alcohol resin is hereinafter sometimes referred to as AA-PVA.

From the viewpoint of improvement of the transparency, the long-term stability, and other qualitative properties of the AA-PVA, an AA-PVA is conventionally proposed, which has a specific range of an acetoacetylation degree ratio (AA degree ratio) determined by classifying particles of the AA-PVA by particle size, measuring acetoacetyl group-containing structural unit contents (which are each hereinafter sometimes referred to as acetoacetyl group content or AA degree) for respective particle size ranges, and dividing the highest one of the AA degrees by the lowest one of the AA degrees (PTL 1).

Further, a method for producing the AA-PVA is proposed, in which a PVA having a predetermined swelling degree and an elution ratio controlled in a predetermined range is swelled with acetic acid, and the swelled PVA is allowed to react with diketene, whereby the AA-PVA is produced as desired (PTL 1).

In another method proposed as the AA-PVA production method, for example, a PVA is swelled with acetic acid, and the swelled PVA is allowed to react with an acetoacetic acid ester, whereby the AA-PVA is produced as desired (PTL 2). US2016/237183A1 discloses acetoacetate modified PVOH powders obtained by swelling PVOH resin in acetic acid and then reacting with diketene. US2016/289362A1 discloses the acetoacetalisation of polyvinyl butyral resins, either by using tert-butyl acetoacetate without solvent or using diketene in N-methylpyrrolidone.

### RELATED ART DOCUMENT

### PATENT DOCUMENT

PTL 1: JP-A-HEI9(1997)-110925
PTL 2: US5719231

### SUMMARY

In recent years, there is a demand for a higher quality AA-PVA, and further improvement is required. Where the AA-PVA has a variation in AA degree depending on the particle size range, for example, it is problematically impossible to homogeneously dissolve the AA-PVA due to a difference in dissolution temperature range or the like depending on the AA degree. Further, where the AA-PVA has a variation in AA degree depending on the particle size range, it is problematically impossible to provide a homogeneous AA-PVA when particles of the AA-PVA are classified into particle size ranges for transportation thereof. Therefore, improvement is required for suppression of the variation.

However, the AA-PVAs disclosed in PTL 1 and PTL 2 fail to sufficiently suppress the variation in AA degree depending on the particle size range and, therefore, are not sufficiently homogeneous. In addition, the AA-PVAs disclosed in PTL 1 and PTL 2 fail to sufficiently reduce the amount of fine particles contained therein. Therefore, further improvement is required for higher quality.

That is, the production method in which the PVA is swelled with acetic acid and the swelled PVA is allowed to react with diketene as disclosed in PTL 1 cannot sufficiently suppress the variation in AA degree depending on the particle size range because of a higher reaction speed, failing to provide a sufficiently homogeneous AA-PVA. Further, the method fails to provide an AA-PVA containing a sufficiently reduced amount of fine particles. The production method using diketene as disclosed in PTL 1 has a high risk due to acute toxicity inherent in diketene, so that further improvement is required from the viewpoint of the safety.

On the other hand, the method disclosed in PTL 2 is better from the viewpoint of the safety without the use of diketene. Even this method cannot sufficiently suppress the variation in AA degree depending on the particle size range, failing to provide an AA-PVA having a sufficiently uniform AA degree and containing a sufficiently reduced amount of fine particles.

In view of the foregoing, the inventors of the present disclosure conducted intensive studies. As a result, the inventors found that, where the acetoacetyl group content distribution of the AA-PVA with respect to specific particle size ranges is controlled in a predetermined range, the aforementioned problem can be solved. Further, the inventors found that an AA-PVA production method including a specific swelling step utilizing an acetoacetic acid ester, and an AA-PVA produced by the production method can solve the aforementioned problem.

According to a first aspect of the present disclosure, there is provided a particulate acetoacetyl group-containing polyvinyl alcohol resin having an acetoacetyl group content distribution such that a ratio between the highest one and the lowest one of acetoacetyl group contents determined for a particle diameter range of less than 105 µm, a particle diameter range of not less than 105 µm and less than 177 µm, a particle diameter range of not less than 177 µm and less than 600 µm, and a particle diameter range of not less than 600 µm ((highest acetoacetyl group content)/(lowest acetoacetyl group content)) is less than 1.2.

According to a second aspect of the present disclosure, there is provided a particulate acetoacetyl group-containing polyvinyl alcohol resin, wherein particles each having a particle diameter of less than 105 µm are present in a proportion of not greater than 6 wt.% based on the overall weight of particles of the particulate acetoacetyl group-containing polyvinyl alcohol resin.

In the acetoacetyl group-containing polyvinyl alcohol resin of the first aspect, particles each having a particle diameter of less than 105 µm are preferably present in a proportion of not greater than 6 wt.% based on the overall weight of particles of the particulate acetoacetyl group-containing polyvinyl alcohol resin.

According to a third aspect of the present disclosure, there is provided a method for producing a particulate acetoacetyl group-containing polyvinyl alcohol resin, the method including the steps of: swelling a polyvinyl alcohol resin with an amide group-containing solvent; and allowing the swelled polyvinyl alcohol resin to react with an acetoacetic acid ester.

According to a fourth aspect of the present disclosure, there is provided a method for producing a particulate acetoacetyl group-containing polyvinyl alcohol resin, the method including the steps of: mixing a polyvinyl alcohol resin with a solvent to swell the polyvinyl alcohol resin to a swilling degree of greater than 2.5; and allowing the swelled polyvinyl alcohol resin to react with an acetoacetic acid ester.

According to the present disclosure, it is possible to provide an AA-PVA with little variation in AA degree depending on the particle size range. Since the AA-PVA thus provided is homogenous with a smaller AA degree distribution irrespective of the particle size, it is expected that the AA-PVA can be safely prepared as having a stable quality.

According to the present disclosure, the AA-PVA can be provided as containing a reduced amount of fine particles. Therefore, it is expected that the AA-PVA can be safely prepared as having a stable quality.

### DESCRIPTION OF EMBODIMENTS

Embodiments of the present disclosure will hereinafter be described in detail by way of example. It should be understood that the present disclosure be not limited to these embodiments within the scope of the present disclosure.

An AA-PVA according to one embodiment of the present disclosure is a particulate AA-PVA having an acetoacetyl group content distribution such that a ratio between the highest one and the lowest one of acetoacetyl group contents determined for a particle diameter range of less than 105 µm, a particle diameter range of not less than 105 µm and less than 177 µm, a particle diameter range of not less than 177 µm and less than 600 µm, and a particle diameter range of not less than 600 µm ((highest acetoacetyl group content)/(lowest acetoacetyl group content)) is less than 1.2.

An AA-PVA according to another embodiment of the present disclosure is a particulate AA-PVA in which particles each having a particle diameter of less than 105 µm are present in a proportion of not greater than 6 wt.% based on the overall weight of particles of the particulate AA-PVA.

### [AA-PVA]

First, the AA-PVA of the present disclosure will be described. The AA-PVA of the present disclosure is a PVA having an acetoacetyl group (AA group) in its side chain, and is prepared by introducing the AA group into a PVA prepared by saponifying a polyvinyl ester resin which is a polymer of a vinyl ester monomer. The AA-PVA of the present disclosure has a structural unit represented, for example, by the following formula (1). In addition to the AA group-containing structural unit represented by the formula (1), the AA-PVA has a vinyl alcohol structural unit, and further has a vinyl acetate structural unit left unsaponified.

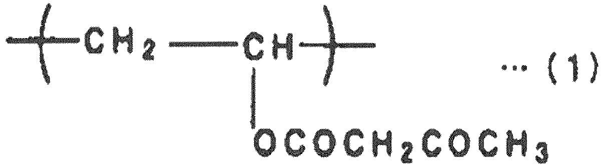

Examples of the vinyl ester monomer as an ingredient include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, and vinyl versatate. Of these, vinyl acetate is preferably used from the viewpoint of economy.

The vinyl ester monomer is generally used alone, but a saponification product of a copolymer of the vinyl ester monomer and a copolymerizable monomer (comonomer) may be used. Examples of the comonomer include: olefins such as ethylene, propylene, isobutylene, α-octene, α-dodecene, and α-octadecene; hydroxyl group-containing α-olefins such as 3-buten-1-ol, 4-penten-1-ol, 5-hexen-1-ol, and 3,4-dihydroxy-1-butene, and acylation products and other derivatives of these hydroxyl group-containing α-olefins; unsaturated acids such as acrylic acid, methacrylic acid, crotonic acid, maleic acid, maleic anhydride, itaconic acid, and undecylenic acid, and salts, monoalkyl esters, and dialkyl esters of these unsaturated acids; nitriles such as acrylonitrile and methacrylonitrile; amides such as diacetoneacrylamide, acrylamide, and methacrylamide; olefinsulfonic acids such as ethylenesulfonic acid, allylsulfonic acid, and methallylsulfonic acid, and salts of these olefinsulfonic acids; vinyl compounds such as alkyl vinyl ethers, dimethylallyl vinyl ketone, N-vinylpyrrolidone, vinyl chloride, vinylethylene carbonate, 2,2-dialkyl-4-vinyl-1,3-dioxolane, and glycerin monoallyl ether; substituted vinyl acetate compounds such as isopropenyl acetate and 1-methoxyvinyl acetate; and vinylidene chloride, 1,4-diacetoxy-2-butene, 1,4-dihydroxy-2-butene, and vinylene carbonate.

Other examples of the comonomer include polyoxyalkylene group-containing monomers such as polyoxyethylene (meth)acryl ether, polyoxyethylene (meth)acrylamide, polyoxypropylene (meth)acrylamide, polyoxyethylene (meth)acrylate, polyoxypropylene (meth)acrylate, polyoxyethylene (1-(meth)acrylamide-1,1-dimethylpropyl) ester, polyoxyethylene vinyl ether, polyoxypropylene vinyl ether, polyoxyethylene allylamine, polyoxypropylene allylamine, polyoxyethylene vinylamine, and polyoxypropylene vinylamine; and cationic group-containing monomers such as N-acrylamidomethyltrimethylammonium chloride, N-acrylamidoethyltrimethylammonium chloride, N-acrylamidopropyltrimethylammonium chloride, 2-acryloxyethyltrimethylammonium chloride, 2-methacryloxyethyltrimethylammonium chloride, 2-hydroxy-3-methacryloyloxypropyltrimethylammonium chloride, allyltrimethylammonium chloride, methallyltrimethylammonium chloride, 3-butenetrimethylammonium chloride, dimethyldiallylammonium chloride, and diethyldiallylammonium chloride. In the present disclosure, (meth)acryl means acryl or methacryl, and (meth)acrylate means acrylate or methacrylate.

The amount of the comonomer to be introduced is properly set depending on the type of the monomer, but is typically not greater than 10 mol %, particularly not greater than 5 mol %. An excessively great introduction amount is not preferred, because the water solubility and the chemical resistance may be impaired.

The ordinary PVA mainly contains 1,3-diol bond in its main chain, and contains 1,2-diol bond in an amount of about 1.5 to about 1.7 mol % in its main chain. It is also possible to use a PVA containing the 1,2-diol bond in an amount increased to 1.7 to 3.5 mol % by elevating the polymerization temperature for the polymerization of the vinyl ester monomer.

The AA group-containing structural unit content (AA degree) of the AA-PVA is typically 0.1 to 20 mol %, more preferably 0.3 to 15 mol %, still more preferably 1 to 10 mol %, particularly preferably 3 to 8 mol %. If the AA group-containing structural unit content is excessively low, the water resistance tends to be reduced. If the AA group-containing structural unit content is excessively high, AA groups are liable to react with each other during long-term storage in a high temperature and high humidity environment, whereby a crosslink structure is formed to reduce the water solubility.

The AA degree can be determined, for example, by nuclear magnetic resonance spectroscopy. Specifically, the AA degree can be calculated from a ratio between the area of a peak attributable to the acetoacetyl group at 2.2 ppm in ¹H-NMR and the area of a peak attributable to a CH₂ unit of the PVA in ¹H-NMR by way of example but not by way of limitation.

In the present disclosure, the acetoacetyl group content distribution (AA degree distribution) with respect to the particle size ranges is represented by a value (AA degree ratio) determined by dividing the highest AA degree by the lowest AA degree out of AA degrees of the AA-PVA measured for respective particle size ranges when the particles of the AA-PVA are classified into the particle size ranges ((highest acetoacetyl group content)/(lowest acetoacetyl group content)).

In the embodiment of the present disclosure, the value of the AA degree distribution is less than 1.2. Specifically, the particles of the AA-PVA are classified into the respective particle size ranges with the use of sieves having mesh sizes of 105 µm, 177 µm, and 600 µm, respectively, and the value of the AA degree distribution is calculated based on the AA degrees of the AA-PVA for the respective particle size ranges. The AA degree distribution value thus calculated is less than 1.2, preferably less than 1.15, more preferably less than 1.13. The lower limit of the AA degree distribution value is not particularly limited, but an AA degree distribution value closer to 1 is preferred in order to provide the effect of the present disclosure.

More specifically, the particles of the AA-PVA include a first particle group of particles each having a particle diameter of less than 105 µm, a second particle group of particles each having a particle diameter of not less than 105 µm and less than 177 µm, a third particle group of particles each having a particle diameter of not less than 177 µm and less than 600 µm, and a fourth particle group of particles each having a particle diameter of not less than 600 µm. The AA-PVA has an AA degree distribution such that a ratio (A^{H}/A^{L}) between the highest acetoacetyl group content (A^{H}) [mol %] and the lowest acetoacetyl group content (A^{L}) [mol %] out of the acetoacetyl group content (A¹) [mol %] of the first particle group, the acetoacetyl group content (A²) [mol %] of the second particle group, the acetoacetyl group content (A³) [mol %] of the third particle group, and the acetoacetyl group content (A⁴) [mol %] of the fourth particle group is less than 1.2 (A^{H}/A^{L}<1.2). The particle groups herein each mean a group of plural particles.

Further, a ratio between a higher acetoacetyl group content and a lower acetoacetyl group content out of the acetoacetyl group content (A¹) [mol %] of the first particle group and the acetoacetyl group content (A⁴) [mol %] of the fourth particle group ((higher acetoacetyl group content)/(lower acetoacetyl group content)) is preferably less than 1.15, more preferably less than 1.13, particularly preferably less than 1.1, especially preferably less than 1.08. The lower limit of the ratio is not particularly limited, but is 1.

A ratio between a higher acetoacetyl group content and a lower acetoacetyl group content out of the acetoacetyl group content (A³) [mol %] of the third particle group and the acetoacetyl group content (A⁴) [mol %] of the fourth particle group ((higher acetoacetyl group content)/(lower acetoacetyl group content)) is preferably less than 1.15, more preferably less than 1.13, particularly preferably less than 1.1, especially preferably less than 1.08. The lower limit of the ratio is not particularly limited, but is 1.

In the present disclosure, the sieves having mesh sizes of 105 µm, 177 µm, and 600 µm, respectively, are used for the classification of the particles according to the particle size. That is, the particles are classified into: a group of particles sieved through the 105-µm sieve; a group of particles sieved through the 177-µm sieve on the 105-µm sieve; a group of particles sieved through the 600-µm sieve on the 177-µm sieve; and a group of particles sieved on the 600-µm sieve.

The average particle diameter of the particulate AA-PVA prepared in the present disclosure is typically 50 to 2,000 µm, preferably 100 to 1,700 µm, more preferably 200 to 1,500 µm, particularly preferably 400 to 1,000 µm. If the average particle diameter is excessively small, the particles are liable to be lumped during dissolution. If the average particle diameter is excessively great, a longer period of time tends to be required for the dissolution.

The average particle diameter is defined as a particle diameter such that the weight-based cumulative value equals to 50 wt.% in a particle diameter distribution prepared by sieving the particles of the AA-PVA with the use of the 105-µm sieve, the 177-µm sieve, and the 600-µm sieve, and classifying the particles of the AA-PVA into the group of particles sieved through the 105-µm sieve, the group of particles sieved through the 177-µm sieve on the 105-µm sieve, the group of particles sieved through the 600-µm sieve on the 177-µm sieve, and the group of particles sieved on the 600-µm sieve.

In the AA-PVA according to one embodiment of the present disclosure, the proportion of the particles each having a particle diameter of less than 105 µm is preferably not greater than 6 wt.%, more preferably not greater than 5 wt.%, particularly preferably not greater than 3 wt.%, based on the overall weight of the particles of the AA-PVA. The lower limit of the proportion of the particles each having a particle diameter of less than 105 µm is not particularly limited, but is preferably closer to 0 wt.%.

In another embodiment of the present disclosure, the AA-PVA contains the particles each having a particle diameter of less than 105 µm in a proportion of not greater than 6 wt.%. That is, the AA-PVA is a particulate AA-PVA, in which the proportion of the particles each having a particle diameter of less than 105 µm is not greater than 6 wt.% based on the total weight of the particles each having a particle diameter of less than 105 µm and the particles each having a particle diameter of not less than 105 µm (based on the overall weight (100 wt.%) of the particles of the AA-PVA). The proportion of the particles each having a particle diameter of less than 105 µm is preferably not greater than 5 wt.%, more preferably not greater than 4 wt.% The lower limit of the proportion of the particles each having a particle diameter of less than 105 µm is not particularly limited, but is preferably closer to 0 wt.%.

In another embodiment of the present disclosure, the proportion of the particles each having a particle diameter of less than 177 µm is not particularly limited, but is preferably not greater than 18 wt.%, more preferably not greater than 15 wt.%, particularly preferably not greater than 12 wt.%. The lower limit of the proportion of the particles each having a particle diameter of less than 177 µm is not particularly limited, but is preferably closer to 0 wt.%.

The saponification degree of the AA-PVA of the present disclosure is the same as the saponification degree of the PVA to be used as its material to be described below.

The average polymerization degree of the AA-PVA of the present disclosure is typically 300 to 4,000, particularly preferably 400 to 2,000, more preferably 500 to 1,500 (as measured in conformity with JIS K6726). If the average polymerization degree is excessively low, the water resistance tends to be reduced. If the average polymerization degree is excessively high, the viscosity of the AA-PVA tends to be increased, making it difficult to handle the AA-PVA.

### [AA-PVA Production Method]

A method for producing the AA-PVA of the present disclosure is not particularly limited, but is preferably a production method which includes the step of allowing the PVA as the material (hereinafter sometimes referred to as "material PVA") to react in a swelled state with an acetoacetic acid ester for ester interchange in order to provide the AA-PVA containing a reduced proportion of fine particles and having an AA degree distribution value falling within the aforementioned preferred range.

Specifically, the AA-PVA production method of the present disclosure is preferably a production method including the step of swelling the material PVA with a solvent and subjecting the swelled material PVA to the ester interchange by using the acetoacetic acid ester as a base agent and further using a catalyst.

The material PVA to be used in the present disclosure typically has a saponification degree of 75 to 99.9 mol %, more preferably 80 to 99.5 mol %, particularly preferably 85 to 99.3 mol % (as measured in conformity with JIS K6726). An excessively low saponification degree is not preferred, because the water solubility tends to be reduced.

The material PVA to be used in the present disclosure preferably has an average polymerization degree of 200 to 4,000, more preferably 400 to 3,500, still more preferably 500 to 3,000 (as measured in conformity with JIS K6726). If the average polymerization degree is excessively low, the water resistance tends to be reduced. If the average polymerization degree is excessively high, the viscosity of the material PVA tends to be increased, making it difficult to handle the material PVA.

The viscosity of a 4 wt.% aqueous solution of the material PVA to be used in the present disclosure is typically 1.5 to 100 mPa•s, preferably 4 to 80 mPa•s, more preferably 5 to 70 mPa•s (as measured at 20°C in conformity with JIS K6726). If the viscosity of the 4 wt.% aqueous solution is excessively high, the viscosity of the material PVA tends to be increased, making it difficult to handle the material PVA. If the viscosity of the 4 wt.% aqueous solution is excessively low, the water resistance tends to be reduced.

The solvent to be used in the step of swelling the material PVA in the present disclosure is not particularly limited, as long as the acetoacetic acid ester to be used for the ester interchange of the PVA can be dissolved in the solvent and the PVA can be swelled with the solvent. Examples of the solvent include organic acids containing at least one carboxyl group, and compounds containing an amide group (amide group-containing solvents). Specific examples of the solvent include: carboxylic acids such as formic acid, acetic acid, propionic acid, and butyric acid; lactam compounds such as 2-pyrrolidone, N-methyl-2-pyrrolidone (NMP), N-methyl-2-piperidone, N-methylcaprolactam, N-acetylpyrrolidone, and N-ethyl-2-pyrrolidone; urea derivatives such as 1,3-dimethyl-2-imidazolidinone (DMI), tetramethylurea, N,N-dimethylethyleneurea, and N,N'-dimethylpropyleneurea (DMPU); and amide compounds such as hexamethylphosphoramide, N,N-dimethylformamide (DMF), N,N-dimethylacetamide (DMAc), N,N,N',N'-tetramethylmalonamide, N,N-diethylacetamide, N,N-dimethylpropionamide, N,N-dimethylisobutyramide, and N-methylformamide. Of these, the compounds containing an amide group (amide group-containing solvents) are preferred, and 2-pyrrolidone, N-methyl-2-pyrrolidone, and N,N'-dimethylpropyleneurea are more preferred. Particularly, N-methyl-2-pyrrolidone is preferred. These solvents can be each used alone, or two or more of these can be used in any ratio in any combination.

The solvent is typically used in an amount of 10 to 300 parts by weight, preferably 40 to 250 parts by weight, particularly preferably 70 to 200 parts by weight, based on 100 parts by weight of the material PVA. If the use amount of the solvent is excessively great, the PVA tends to dissolve in the solvent, and requires a re-precipitating step. If the use amount of the solvent is excessively small, the swelling degree of the PVA tends to be insufficient, resulting in a reduced reaction rate and an uneven reaction.

The swelling degree of the material PVA is preferably rated based on a volume swelling degree (an increase ratio between a volume after the swelling and a volume before the swelling). For example, the swelling degree of the material PVA is represented by a volume ratio (B)/(A) between the volume (B) of the PVA after the swelling and the volume (A) of the PVA before the swelling.

More specifically, for example, 200 g of a PVA having a known volume (A) is put in a reactor to be described later, and 200 g of a solvent (S) is added dropwise into the reactor. After the resulting mixture is uniformly stirred with heating at 91°C for 1 hour, the volume (B) of the PVA is measured, and the swelling degree (B)/(A) is determined. Where N-methyl-2-pyrrolidone (NMP) is used as the solvent (S), the swelling degree (B)/(A) is 3.45. Where acetic acid is used as the solvent (S), the swelling degree (B)/(A) is 2.5.

The method of measuring the volumes (A) and (B) is not particularly limited, but a measuring instrument such as a measuring cylinder may be typically used. The swelled state means a state such that the swelling degree (B)/(A) is greater than 1.0.

In the step of swelling the material PVA in the present disclosure, the swelling degree (B)/(A) is preferably greater than 2.5 and not greater than 10, more preferably not less than 2.8 and not greater than 7.5, particularly preferably not less than 3.0 and not greater than 5.0. An excessively high swelling degree is not preferred, because the PVA tends to dissolve in the solvent and requires a re-precipitating step. An excessively low swelling degree is not preferred, because the PVA is insufficiently swelled to result in a reduced reaction rate and an uneven reaction. In addition, the AA groups are liable to be self-crosslinked.

Examples of the acetoacetic acid ester to be used in the step of allowing the swelled PVA to react with the acetoacetic acid ester in the present disclosure include methyl acetoacetate, ethyl acetoacetate, n-propyl acetoacetate, isopropyl acetoacetate, n-butyl acetoacetate, s-butyl acetoacetate, t-butyl acetoacetate, octyl acetoacetate, oleyl acetoacetate, lauryl acetoacetate, stearyl acetoacetate, benzyl acetoacetate, and phenyl acetoacetate. The alkyl group of the acetoacetic acid ester preferably has a carbon number of 1 to 10, more preferably 1 to 5. Of these, methyl acetoacetate and t-butyl acetoacetate are particularly preferred. These can be each used alone, or two or more of these may be used in any ratio in any combination.

The acetoacetic acid ester is typically used in an amount of 0.1 to 100 parts by weight, preferably 0.5 to 85 parts by weight, particularly preferably 1 to 75 parts by weight, based on 100 parts by weight of the material PVA. If the use amount of the acetoacetic acid ester is excessively great, the swelling of the PVA tends to be inhibited, resulting in a reduced reaction rate and an uneven reaction. If the use amount of the acetoacetic acid ester is excessively small, the chemical equilibrium tends to be biased toward a reaction product side, resulting in a reduced reaction rate.

The catalyst to be used in the step of allowing the swelled PVA to react with the acetoacetic acid ester in the present disclosure is not particularly limited, as long as the catalyst is generally used for the ester interchange reaction. Examples of the catalyst include Brönsted organic acid, Brönsted inorganic acid, Lewis inorganic acid, and Lewis organic base, which may be used alone or in any combination. Specifically, examples of the Brönsted organic acid include acetic acid, propionic acid, butyric acid, valeric acid, caproic acid, benzoic acid, phthalic acid, gallic acid, oxalic acid, malonic acid, succinic acid, glutaric acid, adipic acid, malic acid, citric acid, and aconitic acid. Examples of the Brönsted inorganic acid include sulfuric acid, nitric acid, phosphoric acid, boric acid, hydrofluoric acid, hydrochloric acid, hydrobromic acid, and hydroiodic acid, and partial esterification products of these inorganic acids. Examples of the Lewis inorganic acid include sodium acetate, potassium acetate, magnesium acetate, calcium acetate, zinc acetate, lithium triflate, magnesium triflate, zinc triflate, ytterbium triflate, bisacetylacetonatozinc, tetrakisacetylacetonatozirconium, tin dioctylate, and tetrabutoxytitanium. Examples of the Lewis organic base include primary amines, secondary amines, tertiary amines, pyridine, primary phosphines, secondary phosphines, and tertiary phosphines.

The catalyst is typically used in an amount of not less than 0.01 part by weight, preferably not less than 0.05 parts by weight, more preferably not less than 0.1 part by weight, based on 100 parts by weight of the material PVA. If the use amount of the catalyst is less than 0.01 part by weight, the reaction tends to proceed slowly. The use amount of the catalyst is preferably not greater than 10 parts by weight, more preferably not greater than 5 parts by weight, particularly preferably not greater than 3 parts by weight. The use of greater than 10 parts by weight of the catalyst is economically disadvantageous, and tends to make it difficult to remove the catalyst.

The reactor to be used for the ester interchange reaction in the present disclosure is preferably a device which is capable of heating and is provided with an agitator. Usable examples of such a device include kneader, Henschel mixer, ribbon blender, and other blenders.

In the step of swelling the material PVA, the solvent may be added dropwise to the material PVA. The dropwise addition period may be any desired period, and the lower limit of the dropwise addition period is preferably not shorter than 0.1 hour, more preferably not shorter than 0.5 hours, particularly preferably not shorter than 1.0 hour, depending on the scale of the reaction and the capacity of a cooling equipment. Where the dropwise addition period is not shorter than 0.1 hour, the swelling degree of the PVA tends to be more uniform. The upper limit of the dropwise addition period is preferably not longer than 6 hours, more preferably not longer than 3 hours, particularly preferably not longer than 2 hours. A dropwise addition period of not longer than 6 hours is preferred from the viewpoint of the productivity, suppressing application of excess heat.

The temperature for the reaction of the swelled PVA with the acetoacetic acid ester in the reactor is not particularly limited, but the lower limit of the reaction temperature is preferably not lower than 60°C, more preferably not lower than 70°C, particularly preferably not lower than 80°C. A reaction temperature of not lower than 60°C is preferred from the viewpoint of the productivity, because the reaction rate tends to be increased. The upper limit of the reaction temperature is preferably not higher than 120°C, more preferably not higher than 100°C, particularly preferably not higher than 95°C. A reaction temperature of not higher than 120°C is preferred, because it tends to be easier to suppress the self-crosslinking of AA groups.

In the step of allowing the swelled PVA to react with the acetoacetic acid ester in the present disclosure, the acetoacetic acid ester may be added dropwise to the swelled PVA. The dropwise addition period for the dropwise addition of the acetoacetic acid ester may be any desired period, and the lower limit of the dropwise addition period is preferably not shorter than 0.5 hours, more preferably not shorter than 1 hour, particularly preferably not shorter than 2.0 hours, depending on the scale of the reaction and the capacity of a cooling equipment. A dropwise addition period of not shorter than 0.5 hours is preferred, because it is possible to allow the reaction to proceed while properly maintaining the swelling degree of the PVA. The upper limit of the dropwise addition period is preferably not longer than 8 hours, more preferably not longer than 6 hours, particularly preferably not longer than 5 hours. A dropwise addition period of not longer than 8 hours is preferred from the viewpoint of the productivity.

The reaction period in the ester interchange reaction step is not particularly limited, but the lower limit of the reaction period is preferably not shorter than 1 hour, more preferably not shorter than 2 hours. The upper limit of the reaction period is preferably not longer than 10 hours, more preferably not longer than 6 hours.

After the ester interchange reaction, a washing step is performed to wash the reaction product with the use of a C1 to C3 alcohol as a washing solvent, and then a drying step is performed to remove the solvent. Examples of the C1 to C3 alcohol to be used in the washing step include ethanol, methanol, and n-butyl alcohol. These can be each used alone, or two or more of these can be used in any ratio in any combination. Of these, methanol is preferably used, because it has a lower boiling point and requires a smaller amount of energy for the removal thereof.

The drying period in the drying step is properly selected in consideration of the temperature and pressure conditions, the weight of the reaction product to be dried, and the like, but is preferably set in a typical range of 0.5 to 10 hours. The drying temperature is also properly selected, but is preferably set in a typical range of 20°C to 80°C.

The AA-PVA of the present disclosure thus produced are used in the following use applications (1) to (10):
(1) Formed products: Fibers, films, sheets, pipes, tubes, leakproof films, temporary coating films, chemical laces, watersoluble fibers, and the like.
(2) Adhesive agents: Adhesives, sticking agents, and remoistening agents for wood, paper, aluminum foil, plastics, and the like, binders for nonwoven fabrics, binders for various building materials such as gypsum boards and fibrous boards, binders for powder granulation, additives for cements and mortars, hot melt adhesives, pressure sensitive adhesives, fixing agents for anionic paints, and the like.
(3) Coating agents: Paper clear coating agents, paper pigment coating agents, paper internal sizing agents, textile sizing agents, warp sizing agents, fiber treatment agents, leather finishing agents, paints, antifogging agents, metal anticorrosion agents, zinc plating lustering agents, antistatic agents, conductive agents, temporary paints, and the like.
(4) Blending agents for hydrophobic resins: Antistatic agents and hydrophilizing agents for hydrophobic resins, additives for composite fibers, films, and other formed products, and the like.
(5) Suspension dispersion stabilizers: Pigment dispersion stabilizers for paints, Indian inks, aqueous color inks, adhesives, and the like, dispersion stabilizers for suspension polymerization of various vinyl compounds such as vinyl chloride, vinylidene chloride, styrene, (meth)acrylates, vinyl acetate, and the like.
(6) Emulsion dispersion stabilizers: Emulsifiers for emulsion polymerization of
   various acrylic monomers, ethylenically unsaturated compounds, and butadiene compounds, post-emulsifiers for hydrophobic resins such as polyolefins and polyester resins, epoxy resins, paraffins, bitumens, and the like.
(7) Tackifiers: Tackifiers for various aqueous solutions, emulsions, and petroleum drilling fluids, and the like.
(8) Flocculants: Flocculants for underwater suspended matter and dissolved matter, filtration agents for pulps and slurries, and the like.
(9) Exchange resins: Ion exchange resins, chelate exchange resins, ion exchange membranes, and the like.
(10) Others: Soil conditioners, photosensitizers, photoresist resins, and the like.

### EXAMPLES

The embodiments of the present disclosure will hereinafter be described in greater detail by way of examples and comparative examples. The following examples are provided to describe the embodiments of the present disclosure in detail, and the disclosure is not limited to the following examples, unless the examples fall outside the spirit of the disclosure. In the following examples, "parts" are based on weight.

### [Example 1]

First, 200 parts of a material PVA (having a saponification degree of 99.1 mol %, a 4 wt.% aqueous solution viscosity of 13.3 mPa•s at 20°C, and an average polymerization degree of 1,200) and 0.83 parts of sodium acetate as a reaction catalyst were fed into a kneader heated to 91°C. While the resulting mixture was stirred at a rotation speed of 20 rpm, 200 parts of N-methyl-2-pyrrolidone (NMP) was added dropwise to the mixture in 1 hour, whereby the material PVA was swelled (to a volume swelling degree of 3.45). Thereafter, 142 parts of t-butyl acetoacetate (t-BAA) was added dropwise to the resulting mixture in 3 hours and the reaction was allowed to further proceed for 4 hours, while the rotation speed and the temperature were maintained. After the completion of the reaction, the reaction product was washed with methanol, and was dried at 40°C in vacuo for 3 hours. Thus, a particulate AA-PVA 1 (having an average polymerization degree of 1,200, an AA degree of 4.7 mol %, and an average particle diameter of 437 µm) was prepared.

### [Comparative Example 1]

First, 100 parts of a material PVA (having a saponification degree of 99.1 mol %, a 4 wt.% aqueous solution viscosity of 13.3 mPa•s at 20°C, and an average polymerization degree of 1,200) and 0.83 parts of sodium acetate as a reaction catalyst were fed into a kneader heated to 91°C, and then 30 parts of acetic acid was added to the resulting mixture. The mixture was stirred at a rotation speed of 20 rpm, whereby the material PVA was swelled (to a volume swelling degree of 1.85). Thereafter, 5 parts of diketene was added dropwise to the swelled material PVA in 3 hours and the reaction was allowed to further proceed for 1 hour, while the mixture was stirred at a rotation speed of 20 rpm at a temperature of 60°C. After the completion of the reaction, the reaction product was washed with methanol, and was dried at 70°C in vacuo for 12 hours. Thus, a particulate AA-PVA 2 (having an average polymerization degree of 1,200, an AA degree of 5.2 mol %, and an average particle diameter of 231 µm) was prepared.

### [Comparative Example 2]

First, 200 parts of a material PVA (having a saponification degree of 99.1 mol %, a 4 wt.% aqueous solution viscosity of 13.3 mPa•s at 20°C, and an average polymerization degree of 1,200) and 0.83 parts of sodium acetate as a reaction catalyst were fed into a kneader heated to 91°C, and then 200 parts of acetic acid was added to the resulting mixture. The mixture was stirred at a rotation speed of 20 rpm, whereby the material PVA was swelled (to a volume swelling degree of 2.5). Thereafter, 142 parts of t-butyl acetoacetate was added dropwise to the swelled material PVA in 3 hours and the reaction was allowed to further proceed for 4 hours, while the mixture was stirred at a rotation speed of 20 rpm at a temperature of 91°e. After the completion of the reaction, the reaction product was washed with methanol, and was dried at 40°C in vacuo for 3 hours. Thus, a particulate AA-PVA 3 (having an average polymerization degree of 1,200, an AA degree of 2.7 mol %, and an average particle diameter of 306 µm) was prepared.

### [Classification Method]

Particles of the AA-PVA 1 were classified into AA-PVA particle diameter ranges with the use of sieves having mesh sizes of 105 µm, 177 µm, 600 µm, respectively, as defined in JIS Z8815. Specifically, with the use of these sieves, the particles of the AA-PVA 1 were classified into an AA-PVA particle group of particles each having a particle diameter of less than 105 µm, an AA-PVA particle group of particles each having a particle diameter of not less than 105 µm and less than 177 µm, an AA-PVA particle group of particles each having a particle diameter of not less than 177 µm and less than 600 µm, and an AA-PVA particle group of particles each having a particle diameter of not less than 600 µm. Particles of the AA-PVA 2 and particles of the AA-PVA 3 were classified in the same manner.

### [Measurement of AA Degrees for Respective Particle Size Ranges]

The AA degree of AA-PVA particles in each particle size range was measured by means of a nuclear magnetic resonance device (Ascend 400 (400 MHz), AVANCE III 400, Cryo-probe available from Bruker Inc). Specifically, the AA-PVA particles in each particle size range were dissolved in DMSO-d6 (dimethyl sulfoxide-D6) at a concentration of 4%, and the measurement was performed at 50°C with a cumulative number of times of 16. Based on a ratio between the area of a peak attributable to the acetoacetyl group at 2.2 ppm in ¹H-NMR and the area of a peak attributable to the CH₂ unit of the PVA in ¹H-NMR, the AA degree was calculated. An AA degree distribution was determined based on AA degrees calculated for the respective particle diameter ranges. The results are shown in Table 1.

### [Measurement of Average Particle Diameter]

A particle diameter such that a weight-based cumulative value equals to 50 wt.% in a particle diameter distribution prepared by sieving the particles of the AA-PVA with the use of the 105-µm sieve, the 177-µm sieve, and the 600-µm sieve, and classifying the particles of the AA-PVA into the group of particles sieved through the 105-µm sieve, the group of particles sieved through the 177-µm sieve on the 105-µm sieve, the group of particles sieved through the 600-µm sieve on the 177-µm sieve, and the group of particles sieved on the 600-µm sieve was determined by exponential function approximation, and was defined as the average particle diameter.

In Example 1, as shown in Table 1, the AA degree of the AA-PVA particles classified in the particle diameter range of less than 105 µm was the highest, and the AA degree of the AA-PVA particles classified in the particle diameter range of not less than 177 µm and less than 600 µm was the lowest, so that the value of the AA degree distribution was 1.09.

In Comparative Example 1, on the other hand, the AA degree of the AA-PVA particles classified in the particle diameter range of less than 105 µm was the highest, and the AA degree of the AA-PVA particles classified in the particle diameter range of not less than 600 µm was the lowest, so that the value of the AA degree distribution was 1.53.

In Comparative Example 2, the AA degree of the AA-PVA particles classified in the particle diameter range of less than 105 µm was the highest, and the AA degree of the AA-PVA particles classified in the particle diameter range of not less than 600 µm was the lowest, so that the value of the AA degree distribution was 1.4.

**Table 1**

| | | Example 1 | Comparative Example 1 | Comparative Example 2 |
|---|---|---|---|---|
| Base material | | t-BAA^{*1} | Diketene | t-BAA^{*1} |
| Solvent | | NMP^{*2} | Acetic acid | Acetic acid |
| Catalyst | | Na acetate | Na acetate | Na acetate |

| AA degree (mol %)^{*3} | | | | |
|---|---|---|---|---|
| | Particle diameter of less than 105 µm | 4.8 | 5.5 | 3.5 |
| | Particle diameter of not less than 105 µm and less than 177 µm | 4.7 | 5.1 | 2.9 |
| | Particle diameter of not less than 177 µm and less than 600 µm | 4.4 | 4.1 | 2.9 |
| | Particle diameter of not less than 600 µm | 4.7 | 3.6 | 2.5 |
| AA degree distribution^{*4} | | 1.09 | 1.53 | 1.4 |

| | | | | |
|---|---|---|---|---|
| *1: t-butyl acetoacetate *2: N-methyl-2-pyrrolidone *3: AA group-containing structural unit content of AA-PVA *4: (Highest AA degree)/(Lowest AA degree) | | | | |

The weight of AA-PVA particles in each particle size range was measured, and the particle size distribution (wt.%) was calculated with the total weight of the AA-PVA particles in the respective particle size ranges defined as 100 wt.%. The results are shown in Table 2.

**Table 2**

| | | Example 1 | Comparative Example 1 | Comparative Example 2 |
|---|---|---|---|---|
| Base material | | t-BAA^{*1} | Diketene | t-BAA^{*1} |
| Solvent | | NMP^{*2} | Acetic acid | Acetic acid |
| Catalyst | | Na acetate | Na acetate | Na acetate |

| Particle size distribution (wt.%) | | | | |
|---|---|---|---|---|
| | Particle diameter of less than 105 µm | 2.3 | 13 | 6.1 |
| | Particle diameter of not less than 105 µm and less than 177 µm | 8.4 | 23.4 | 14.8 |
| | Particle diameter of not less than 177 µm and less than 600 µm | 55 | 52.6 | 59 |
| | Particle diameter of not less than 600 µm | 34.3 | 11 | 20.1 |

| | | | | |
|---|---|---|---|---|
| *1: t-butyl acetoacetate *2: N-methyl-2-pyrrolidone | | | | |

As shown in Table 2, it was confirmed that the proportion of the particles classified in the particle size range of less than 105 µm was sufficiently reduced in Example 1 and, in contrast, that the proportion of the particles classified in the particle size range of less than 105 µm was not sufficiently reduced in Comparative Examples 1 and 2.

According to the present disclosure, the AA-PVA can be safely produced without the use of diketene, and the AA-PVA produced with the use of the acetoacetic acid ester has a uniform AA degree distribution throughout the particle size ranges. Therefore, the AA-PVA can be produced as having a stable quality.

According to the present disclosure, the AA-PVA can be safely produced without the use of diketene, and the AA-PVA produced with the use of the acetoacetic acid ester contains a smaller proportion of particles having a particle diameter of less than 105 µm. Therefore, the AA-PVA can be produced as having an excellent quality.

## Claims

1. A particulate acetoacetyl group-containing polyvinyl alcohol resin having an acetoacetyl group content distribution such that a ratio between a highest acetoacetyl group content and a lowest acetoacetyl group content determined for a particle diameter range of less than 105 µm, a particle diameter range of not less than 105 µm and less than 177 µm, a particle diameter range of not less than 177 µm and less than 600 µm, and a particle diameter range of not less than 600 µm ((highest acetoacetyl group content)/(lowest acetoacetyl group content)) is less than 1.2, wherein the particle diameter and the acetoacetyl group contents are determined by the methods disclosed in the description.

2. A particulate acetoacetyl group-containing polyvinyl alcohol resin, wherein particles each having a particle diameter of less than 105 µm are present in a proportion of not greater than 6 wt.% based on a total weight of particles of the particulate acetoacetyl group-containing polyvinyl alcohol resin.

3. The acetoacetyl group-containing polyvinyl alcohol resin according to claim 1, wherein particles each having a particle diameter of less than 105 µm are present in a proportion of not greater than 6 wt.% based on a total weight of particles of the particulate acetoacetyl group-containing polyvinyl alcohol resin.

4. A method for producing a particulate acetoacetyl group-containing polyvinyl alcohol resin, the method comprising:
swelling a polyvinyl alcohol resin with a solvent; and
allowing the swelled polyvinyl alcohol resin to react with an acetoacetic acid ester;
wherein the swelling is either one of:
(i) swelling the polyvinyl alcohol resin with an amide group containing solvent; and
(ii) mixing the polyvinyl alcohol resin with the solvent so as to swell the polyvinyl alcohol resin to a swelling degree of greater than 2.5.

## Patentansprüche

1. Ein teilchenförmiges Acetoacetylgruppen-haltiges Polyvinylalkoholharz mit einer Acetoacetylgruppen-Gehaltsverteilung, derart, dass ein Verhältnis zwischen einem höchsten Acetoacetylgruppengehalt und einem niedrigsten Acetoacetylgruppengehalt bestimmt für einen Teilchendurchmesserbereich von weniger als 105 µm, einen Teilchendurchmesserbereich von nicht weniger als 105 µm und weniger als 177 µm, einen Teilchendurchmesserbereich von nicht weniger als 177 µm und weniger als 600 µm und einen Teilchendurchmesserbereich von nicht weniger als 600 µm ((höchster Acetoacetylgruppengehalt)/(niedrigster Acetoacetylgruppengehalt)) weniger als 1,2 beträgt, wobei der Teilchendurchmesser und die Acetoacetylgruppengehalte durch die in der Beschreibung offenbarten Verfahren bestimmt werden.

2. Ein teilchenförmiges Acetoacetylgruppen-haltiges Polyvinylalkoholharz, wobei Teilchen mit jeweils einem Teilchendurchmesser von weniger als 105 µm in einem Anteil von nicht größer als 6 Gew.-%, bezogen auf ein Gesamtgewicht der Teilchen des teilchenförmigen Acetoacetylgruppen-haltigen Polyvinylalkoholharzes, vorhanden sind.

3. Das Acetoacetylgruppen-haltige Polyvinylalkoholharz gemäß Anspruch 1, wobei Teilchen mit jeweils einem Teilchendurchmesser von weniger als 105 µm in einem Anteil von nicht größer als 6 Gew.-%, bezogen auf ein Gesamtgewicht der Teilchen des teilchenförmigen Acetoacetylgruppen-haltigen Polyvinylalkoholharzes, vorhanden sind.

4. Ein Verfahren zur Herstellung eines teilchenförmigen Acetoacetylgruppen-haltigen Polyvinylalkoholharzes, wobei das Verfahren umfasst:
Quellen eines Polyvinylalkoholharzes mit einem Lösungsmittel; und
Reagieren lassen des gequollenen Polyvinylalkoholharzes mit einem Acetessigsäureester;
wobei das Quellen eines der folgenden ist:
(i) Quellen des Polyvinylalkoholharzes mit einem eine Amidgruppe enthaltenden Lösungsmittel; und
(ii) Mischen des Polyvinylalkoholharzes mit dem Lösungsmittel, um das Polyvinylalkoholharz auf einen Quellgrad von größer als 2,5 zu quellen.

## Revendications

1. Résine de poly(alcool vinylique) contenant un groupe acétoacétyle particulaire ayant une distribution de la teneur en groupe acétoacétyle telle que le rapport entre la teneur maximale en groupe acétoacétyle et la teneur minimale en groupe acétoacétyle, déterminé pour une plage granulométrique inférieure à 105 µm, une plage granulométrique d'au moins 105 µm et inférieure à 177 µm, une plage granulométrique d'au moins 177 µm et inférieure à 600 µm, et une plage granulométrique d'au moins 600 µm ((teneur maximale en groupe acétoacétyle) / (teneur minimale en groupe acétoacétyle)), soit inférieur à 1,2, dans laquelle la granulométrie et les teneurs en groupe acétoacétyle sont déterminées par les méthodes divulguées dans la description.

2. Résine de poly(alcool vinylique) contenant un groupe acétoacétyle particulaire, dans laquelle des particules ayant chacune une granulométrie inférieure à 105 µm sont présentes en une proportion d'au plus 6 % en poids par rapport au poids total des particules de la résine de poly(alcool vinylique) contenant un groupe acétoacétyle particulaire.

3. Résine de poly(alcool vinylique) contenant un groupe acétoacétyle selon la revendication 1, dans laquelle des particules ayant chacune une granulométrie inférieure à 105 µm sont présentes en une proportion d'au plus 6 % en poids par rapport au poids total des particules de la résine de poly(alcool vinylique) contenant un groupe acétoacétyle particulaire.

4. Méthode pour produire une résine de poly(alcool vinylique) contenant un groupe acétoacétyle particulaire, la méthode comprenant :
le gonflement d'une résine de poly(alcool vinylique) avec un solvant ; et
le fait de laisser la résine de poly(alcool vinylique) gonflée réagir avec un ester d'acide acétoacétique ;
dans laquelle le gonflement est l'un ou l'autre parmi :
(i) le gonflement de la résine de poly(alcool vinylique) avec un solvant contenant un groupe amide ; et
(ii) le mélange de la résine de poly(alcool vinylique) avec le solvant de façon à ce que la résine de poly(alcool vinylique) gonfle jusqu'à un degré de gonflement supérieur à 2,5.
